# EUROPEAN PATENT SPECIFICATION

(11) **EP 0 831 398 B1**
(45) Date of publication and mention of the grant of the patent: **26.02.2003**
(21) Application number: 97110892.3
(22) Date of filing: 02.07.1997
(51) Int. Cl.: G06F 9/46, G06F 17/60

(54) **Ensuring atomicity for a collection of transactional workitems in a workflow-management-system**
Absicherung der Unteilbarkeit für eine Ansammlung von transaktionellen Arbeitsschritten in einem Arbeitsflussverwaltungssystem
Assurer l'indivisibilité d'une collection de pas de travail dans un système de gestion de flux de travail

(30) Priority: 01.08.1996 EP 96112430
(43) Date of publication of application: 25.03.1998
(73) Proprietor: International Business Machines Corporation, Armonk, N.Y. 10504 (US)
(72) Inventor: Leymann, Frank, Dr., 71134 Aidlingen 3 (DE); Roller, Dieter, 71101 Schönaich (DE)
(74) Representative: Duscher, Reinhard, Dr.

(56) References cited:
- EP-A- 0 694 838
- WO-A-94/18620
- GB-A- 2 263 988

## Description

### 1 Background of the Invention

### 1.1 Field of the Invention

The present invention relates to the field of process management of a workflow environment on computer systems and the field of computerized transaction processing.
More particularly, the invention relates to the area of computerized transaction execution with a workflow management systems (WFMS).

### 1.2 Description and Disadvantages of Prior Art

A **transaction**, also called a transactional application, comprises a sequence of operations that changes recoverable resources and data such as a database from one consistent state into another. A transaction processing system guarantees that if a transaction executes some updates against recoverable resources and data, and if a failure occurs before the transaction reaches its normal termination or an interim point of consistency, then those updates will be undone (roll-back). When a new point of consistency has been reached and all updates made by the transaction must be made permanent, the transaction commits.
To fulfill this transaction recovery guarantee, the system must be able to remember across system outages both transactions in progress and their update actions, so that their effect on recoverable data can be properly reflected when the system is restarted. In general the system maintains a **log**, recorded and maintained by a **log manager**, of each transaction's progress and changes to the resources and data in order to fulfill the transaction recovery guarantee. The log data, known as log records, can be examined to ensure that either the transaction's committed actions are reflected in the database or were undone. When the log records include actual data, they can also be used to reconstruct data which has been damaged or lost, such as by the failure of a storage device. The log can be thought of as an ever growing sequential file.
The log is permanently stored on stable storage such as a disk file, which remains intact and available across system failures. Log records are first written to temporary, volatile log files buffers in the computer's memory, and then transferred to stable storage at certain times (for example when a transaction is committed).

**Locking**, supported by a **lock manager**, is used to control simultaneously executing (i.e. concurrent) transactions' access to shared resources and shared data, and in particular is used to prevent concurrent transactions from inconsistently modifying the same resources and data. Appropriate use of locking can guarantee a transaction that the resource it manipulates and the data it reads is in a consistent state and that the resource and data does not contain uncommitted updates of other transactions.
The recoverable resources and data the transaction is manipulating further may be supported by a **resource manager**. A resource manager is a subsystem that manages some transactional objects of a certain type. The resource manager typically offers services to applications or other resource managers, which might be available in the overall system. A transactional database system, a transaction queue manager, a transactional session manager and so forth all can act as a resource manager.
A **transaction manager** administrates, manages and coordinates the flow of the multitude of concurrently processing transactions through the computer system. It orchestrates the commit and undo, i.e. rollback, of transactions as well as the recovery of objects, resource managers, or sites after they fail.
Above mentioned consistency requirement for a certain transaction and for all other concurrently processing transaction in the local or distributed transaction system is more accurately expressed as the **ACID** requirement. Actually **ACIDicity** is a combination of four different sub-requirements:
- **atomicity**
   A transactions's changes to the state of the overall system are atomic; either all happen or none happen. These changes include all changes to resources including database changes, messages, actions on transducers and so forth.
- **consistency**
   A transaction is a correct transformation of the system state. The actions taken as a group do not violate any of the integrity constraints associated with the state. This requires that the transaction be a correct program.
- **isolation**
   Even though transactions execute concurrently, it appears to each transaction T, that other transactions execute, either before T or after T, but not both. Therefore intermediate states of one transaction are not visible to the other transactions.
- **durability**
   Once a transaction completes successfully and it commits its activities, its changes to the state survive failures, i.e. the state changes became permanent.

Within computer science mechanisms are known to ensure atomicity of global transactions. Details can be found in "J. Gray, A. Reuter, Transaction Processing: Concepts and Techniques, Morgan Kaufmann Publishers, San Francisco (CA)" for instance. The focus is in so-called **Atomic Commit Protocols (ACP)** which are synchronous protocols allowing collections of transactions to reach a common consistent transactional outcome i.e. a consistent system state (i.e. either commit or abort). The most wide-spread exploited ACP is the so-called **Two-Phase-Commit (2PC)** protocol which has been implemented and used many times in a large number of different commercial systems.
Due to its importance the 2PC has been standardized by industry consortia: For instance the procedural variant has been standardized by X/OPEN; its details can be found in "X/OPEN Guide, Distributed Transaction Processing Reference Model (Version 2), X/OPEN Company Ltd., U.K. 1993". The object-oriented variant has been standardized by the Object-Management-Group (OMG); its details can be found in "Object Management Group, Object Transaction Services (OTS), OMG Document TC 94.8.4 (1994)". Many standard compliant implementations of the corresponding X/OPEN standard exist and many compliant implementations of the corresponding OMG standard are on its way or have been released recently.

The expressive power of a "classic" transaction just consisting of a single atomic activity is quite limited. Many situations exist in which more flexible means of control would be required than classical transaction provide. Especially for real-world applications collections of transactions, called a **global transaction**, do have to cooperate to achieve a desired processing goal.
For such complex transactions various different models have been developed. Examples are savepoint techniques, nested transactions, chained transactions and so on. An overview of different models can be found for instance in "J. Gray, A. Reuter, Transaction Processing: Concepts and Techniques, Morgan Kaufmann Publishers, San Francisco (CA)".

A completely different area of technology not related to TP systems is the domain of **Workflow-Management-Systems (WFMS)**. The process of designing, developing and manufacturing a new product and the process of changing or adapting an existing product presents many challenges to product managers and engineers to bring the product to market for the least cost and within schedule while maintaining or even increasing product quality. Many companies are realizing that the conventional product design process is not satisfactory to meet these needs. They require early involvement of manufacturing engineering, cost engineering, logistic planning, procurement, manufacturing, service and support with the design effort. Furthermore, they require planning and control of product data through design, release, and manufacturing.

The correct and efficient execution of **business processes** within a company, e. g. development or production processes, is of enormous importance for a company and has significant influence on company's overall success in the market place. Therefore, those processes have to be regarded similar as technology processes and have to be tested, optimized and monitored. The management of such processes is usually performed and supported by a computer based process or workflow management system.

In D. J. Spoon: "Project Management Environment", IBM Technical Disclosure Bulletin, Vol. 32, No. 9A, February 1990, pages 250 to 254, a process management environment is described including an operating environment, data elements, and application functions and processes.

In R. T. Marshak: "IBM's FlowMark, Object-Oriented Workflow for Mission-Critical Applications", Workgroup Computing Report (USA), Vol. 17, No. 5, 1994, page 3 to 13, the object character of IBM FlowMark as a client/server product built on a true object model that is targeted for mission-critical production process application development and deployment is described.

In H. A. Inniss and J. H. Sheridan: "Workflow Management Based on an Object-Oriented Paradigm", IBM Technical Disclosure Bulletin, Vol. 37, No. 3, March 1994, page 185, other aspects of object-oriented modelling on customization and changes are described.

In F. Leymann and D. Roller: "Business Process Management with FlowMark", Digest of papers, Cat. No. 94CH3414-0, Spring COMPCON 94, 1994, pages 230 to 234, the state-of-the-art computer process management tool IBM FlowMark is described. The meta model of IBM FlowMark is presented as well as the implementation of IBM FlowMark. The possibilities of IBM FlowMark for modelling of business processes as well as their execution are discussed. The product IBM FlowMark is available for different computer platforms and documentation for IBM FlowMark is available in every IBM branch.

In F. Leymann: "A meta model to support the modelling and execution of processes", Proceedings of the 11th European Meeting on Cybernetics and System Research EMCR92, Vienna, Austria, April 21 to 24, 1992, World Scientific 1992, pages 287 to 294, a meta model for controlling business processes is presented and discussed in detail.

The "IBM FlowMark for OS/2", document number GH 19-8215-01, IBM Corporation, 1994, available in every IBM sales office, represents a typical modern, sophisticated, and powerful workflow management system. It supports the modelling of business processes as a network of activities. This network of activities, the **process model**, is constructed as a directed, acyclic, weighted, colored graph. The nodes of the graph represent the **activities** which are performed. The edges of the graph, the **control connectors**, describe the potential sequence of execution of the activities. Definition of the process graph is via the IBM FlowMark Definition Language (FDL) or the built-in graphical editor. The runtime component of the workflow manager interprets the process graph and distributes the execution of activities to the right person at the right place, e. g. by assigning tasks to a work list according to the respective person, wherein said work list is stored as digital data within said workflow or process management computer system.

In F. Leymann and W. Altenhuber: "Managing business processes as an information resource", IBM Systems Journal, Vol. 32(2), 1994, the mathematical theory underlying the IBM FlowMark product is described.

In D. Roller: "Verifikation von Workflows in IBM FlowMark", in J. Becker und G. Vossen (Hrsg.):
"Geschaeftsprozessmodellierung und Workflows", International Thompson Publishing, 1995, the requirement and possibility of the verification of workflows is described. Furthermore the feature of graphical animation for verification of the process logic is presented as it is implemented within the IBM FlowMark product.

The PCT patent application WO 94/18620 titled "Method And Apparatus For Managing Business Processes" just represents one further example of general background art relating to workflow management systems. Though the term "Transaction Manager" is used within this document this entity is nothing else as the workflow engine itself executing the process model. Thus there exists no relationship to the current invention; this application does not even share the same problem as the current invention.

The European patent application EP 0 694 838 A1 "Step Level Recovery" is an example for a teaching relating to the transaction processing itself. It discloses how several sub steps potentially executed on different computer systems within a distributed environment can be combined in a chained transaction to achieve atomic behavior for the set of sub steps. This document is completely mute on Workflow Management Systems and process models representing arbitrary graphs of activities and thus provides no hint on how to achieve transactional behavior of sub graphs within such process models.

For implementing a computer based process management system, firstly the business processes have to be analyzed and, as the result of this analysis, a process model has to be constructed as a network of activities corresponding to the business process. In the IBM FlowMark product, the process models are not transformed into an executable. At run time, an instance of the process is created from the process model, called a process instance. This process instance is then interpreted dynamically by the IBM FlowMark product.

Up to the current point in time transaction processing systems and workflow management systems are separate technological areas. Of course it is possible to implement an activity being part of a process model of a workflow as a transaction but no further intimate relationship do exist. For example the state of the art is lacking a flexible global transaction approach integrated into a WFMS. One example for such general background art of Workflow Management Systems is represented by the UK patent application GB 2 263 988 A titled "Computer Aided Workflow Management". This application teaches to execute any activity within a process model as an individual transaction. The application is completely mute on how to group several activities into some global transaction context.

Further difficulties are encountered when existing software components should be used for implementing activities in a WFMS and if at the same commit scope and transaction boundaries are to be established not already explicitly programmed into the components.

Different activities are currently standardizing interfaces and protocols which should allow manufacturer to build components that can be invoked by all WFMSs that are in compliance with these standards (e.g. "invoked applications" of the Workflow Management Coalition WfMC (for details refer to "Workflow Management Coalition, The workflow reference model", Document Number TC00-1003, 1994), "business objects" as common facilities of the Object Management Group OMG (for details refer to "Object Management Group, The Common Object Request Broker: Architecture and Specification", OMG, Framingham, MA, 1992), or "business objects" defined by the Object Definition Alliance ODA). The goal is to create an industry for prefabricated components which can be bought off-the-shelf to compose implementations of applications based on models for business processes. Such components will then be reusable across different WFMSs and across business processes. In order to maximize the reusability of these components no assumptions should be made about its usage with respect to transaction boundaries as an individual activity cannot foresee the commit scope within which it will be used later.

The current state of the art creates the problem that manufacturers of components are not able to implement their components in such a way that they can comply with externally established transaction boundaries, i.e. allow their users to overwrite the end-of-transaction decisions made by the manufacturer's implementation. This significantly limits the scope of applicability of these components. These components cannot easily compose applications which have certain transactional properties which otherwise must be programmed into the components of the application.

### 1.3 Objective of the Invention

The invention is based on the objective to control and process a collection of a multitude of potentially distributed transactions ensuring transactional behavior for this collection, i.e. ensuring its atomicity. More particularly, the objective of the invention is to provide a computerized methodology for defining, controlling and processing a collection of a multitude of potentially distributed transactional workitems ensuring the atomicity of the collection of transactional workitem while the transactional workitems being part of a process model of the workflow environment and the commit scope of said collection is not necessarily implemented within said transactional workitems.

### 2 Summary and Advantages of the Invention

The objective of the invention is solved by claim 1.
The current invention ensures atomic execution of a collection of transactional workitems processed by at least one computer system, said computer system storing a process-model, said process-model comprising one or more activities being the nodes of an arbitrary graph, and directed edges of said graph being control-connectors defining a potential flow of control within said process-model. The fundamental approach of this invention consists in exploiting the global information already available within the process model to identify and define those transactional workitems constituting a collection of transactional workitems with a common commit scope and thus representing a global transaction. Such a collection is called an atomic sphere. For the purpose to define such atomic spheres the process model is analyzed to identify subgraphs having the property that such a subgraph does not contain not necessarily different activities which are connected by a path of control-connectors which contains at least one activity not contained in said atomic-sphere. Therefore the structural information on commit scopes is no longer situated within a TP system or within the transactional application.

The technique proposed by the current invention allows to use the global information already available in the process model to define atomic spheres. The approach to associate the definitions on commit scopes and transaction boundaries on the level of process models and not within the implementation of an transactional application opens the door for an industry for prefabricated components which can be bought off-the-shelf to compose implementations of applications based on models for business processes. Such components will then be reusable across different processing environments and across different business processes. The current teaching maximizes the reusability of these components because no assumptions has to be made anymore about a component's usage with respect to transaction boundaries as an individual activity cannot foresee the commit scope within which it will be used later. This invention enables manufacturers of WFMSs
1. to let their customers specify groupings of activities which will have the property that either all activities of the grouping have performed transactionally successful (i.e. its changes on recoverable objects have been committed or were identified to be omitted from transaction completion base on the actual workflow) or all have been aborted,
2. to manage such groupings at run time in such a way that the above operational behavior is enforced.

This invention further enables manufactures of components to implement their components in such a way that they can comply with externally established transaction boundaries, i.e. allow their users to overwrite the end-of-transaction decisions made by the manufacturer's implementation. This will broaden the scope of applicability of these components.
This invention further enables users WFMSs to easily to use components to compose applications which have certain transactional properties which otherwise must be programmed into the components of the application.
Moreover the invention reduces the conceptual and technical gap existing between TP systems and WFMS.

Additional advantages are accomplished by claim 2.
A computerized method of defining at least one atomic-sphere is extended to determine sink-activities of said atomic-sphere with no outgoing control-connector and, if at least one sink-activity is determined, adding a no-op-activity to said process-model being outside of said atomic-sphere and connecting said sink-activity to that no-op-activity with a virtual-control-connector, said no-op-activity implementing a dummy activity.
Due to these extensions of the process model the process to execute and control atomic execution of an atomic sphere, based on the method to define an atomic sphere, becomes much more efficient.

Additional advantages are accomplished by claim 3.
The current teaching suggest to add a TRUE-transition-condition always being true to said virtual-connectors.

This again increases efficiency as no processing intensive verification is required whether the corresponding no-op-activity may be started or not.

Additional advantages are accomplished by claim 4 and 5. According the teaching of this invention the computerized method of defining an atomic-sphere is to be executed by separate control-instance which can for instance be a workflow-management-system or a transaction-processing-system.

A WFMS is an ideal candidate for executing the suggested method as the whole process model information is available to this control instance. One could go even a step further and extend existing TP systems to executed the methodology. It is also possible to merge WFMS and TP systems to a new type of TP system also defining atomic spheres.

The objective of the invention further is solved by claim 6. The current invention teaches to atomically execute an atomic-sphere by at least one computer system by creating an atomic-sphere-transaction-context for said atomic-sphere, if the control-flow along said control-connectors enters said atomic-sphere the first time, and ensuring that the control-flow will not leave said atomic-sphere until the complete control-flow reaches the boundary of said atomic-sphere by postponing navigation along control-connectors leaving said atomic-sphere until all leaving control-connectors are processed.

This methodology complements the method of defining an atomic sphere and thus also supports the advantages referred to above. Moreover it should be pointed out that the approach to introduce a method separate from the transactional workitems to control the commit scopes significantly reduces the implementation effort and the processing efficiency of transactional workitems. Transactional workitems are no longer forced to control a potential commit scope they are operating in.

Additional advantages are accomplished by claim 7.
The current invention teaches to end said atomic-sphere-transaction-context, when the complete control-flow reaches said boundary of said atomic-sphere by committing all transactional-workitems processed as part of said atomic-sphere.

Besides the fact that this behavior ensures the atomicity of the global transaction it may reduces at the same time the number of commits and the effort of commit handling as committing an atomic sphere may be done only once.

Additional advantages are accomplished by claim 8.
Atomically executing an atomic-sphere takes place by using an existing atomic-sphere-transaction-context, if the control-flow enters an atomic-sphere for which an atomic-sphere-transaction-context has been established already because the control-flow entered said atomic-sphere before.

This feature supports to process the activities within a process model in a parallel fashion. Each activity may be processed in parallel and independent from other activities automatically and as soon as a transactional workitem is started it is determined if an transaction context does already exist. If so, the transactional workitem automatically joins the atomic sphere it belongs to.

Additional advantages are accomplished by claim 9.
According this teaching a transactional-workitem is either never committing said ending said atomic-sphere-transaction-context or a transactional-workitem is committing only, if no atomic-sphere-transaction-context has been established yet.

Above feature supports the possibility that a certain transactional workitem may be implemented based on a private commit scope but as soon it is processed as part of an atomic sphere it joins the transaction context of the encompassing atomic sphere. Again such a property is a significant advantage in terms of above mentioned prefabricated component industry.
Additional advantages are accomplished by claim 10 and 11.
The current inventions teaches several possibilities to determine a potential existence of an atomic-sphere-transaction-context. This determination can be achieved by an query-transaction-service (GetRoot), or by passing a potential existing atomic-sphere-transaction-context to an activity when invoking said activity, or by passing a transaction-identifier to an activity when invoking said activity, or by passing said atomic-sphere-transaction-context to an activity as part of an input-container.

This large number of different alternatives supports significant amount of flexibility allowing to operate this method in almost any type of environment.

Additional advantages are accomplished by claim 12.
This part of the invention teaches a performance-effective approach to ensure that the control-flow will not leave an atomic-sphere (S) until the complete control-flow reaches the boundary of said atomic-sphere. For this purpose the invention suggests to administrate a set of actual-obstructions (OBST(S)) comprising the set of all control-connectors originating from activities within said atomic-sphere directed to target-activities outside said atomic-sphere and which control-connectors have not been reached so far by the current process instance, and by further delaying execution of said target-activities until all obstructions of said set of actual-obstructions have been reached.

Above feature exploits information already available to the control instance supervising the execution of a process model thus preventing to setup a lot of extra control information to manage atomic spheres.

### 3 Brief Description of the Drawings

- **Figure 1**: is a diagram reflecting the overall structure of a transaction program in pseudo-code
- **Figure 2**: visualizes the basic control flow of a transactional application and the major components within a transaction processing system
- **Figure 3**: is a visualization of the distributed transaction model
- **Figure 4**: is a diagram reflecting the problem of commit scopes of a single transactional workitem vs. a collection of transactional workitems
- **Figure 5**: depicts an example of the notion of an atomic sphere together with a extension avoiding deadlock situations
- **Figure 6**: is a diagram reflecting the major elements to determine a potential existing transactional context
- **Figure 7**: is a diagram reflecting the set of formal obstructions fobst(S) of a certain atomic sphere S and the notion of virtual nodes and virtual connectors
- **Figure 8**: is a diagram reflecting details of administrating the set of actual obstructions

### 4 Description of the Preferred Embodiment

If the current specification is referring to a transactional workitem, or transaction in general, this represents no limitation to a local or distributed transaction. Typically according this specification a transaction may be of any of these types. Moreover, when referring to the general notion of a transaction, the textual context will make clear if that general concept is meant or if a transactional workitem as a specific embodiment of a transaction is denoted.

Even if the following is concentrating on transactional workitems being activities within a process model it is to be pointed out that any number of additional (non-transactional) activities also be part of a process model which will not be referenced explicitly.

The current invention is illustrated based on IBM's FlowMark workflow management system. Of course any other WFMS could be used instead. Furthermore the current,teaching applies also to any other type of system which offers WFMS functionalities not as a separate WFMS but within some other type system. For example WFMS functionalities could be integrated to TP systems.

### 4.1 Introduction

### 4.1.1 Transaction Processing

As already outlined, a transaction, also called a transactional application, comprises a sequence of operations that changes recoverable resources and data such as a database from one consistent state into another. A transaction processing system guarantees that if a transaction executes some updates against recoverable resources and data, and if a failure occurs before the transaction reaches its normal termination or an interim point of consistency, then those updates will be undone (roll-back). When a new point of consistency has been reached and all updates made by the transaction must be made permanent, the transaction is committed.

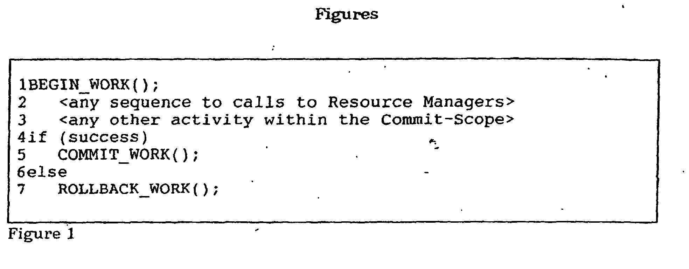

Figure 1 gives a short outline on the overall structure of a transaction program in a pseudo-code representation. Of course a transaction application program can be written in any conventional or specialized programming language. The transaction application program declares the start of a new transaction by invoking BEGIN_WORK() in line 1. Thereafter all operations performed by the program will be part of this transaction. Also, all operations performed by other programs in service of the transaction application program (within the program scope of line 2-3) will be part of the transaction. The program declares the transaction to be a complete and correction transformation of the system state by invoking COMMIT_WORK() in line 5 of Figure 1. Once the transaction successfully commits, the transaction's effects are durable and persistent. If something goes wrong in the transaction, the transaction application can undo all the operations by invoking ROLLBACK_WORK() in line 7. If there is a failure during the transaction's execution, the system can unilaterally cause the transaction to be rolled back. BEGIN-COMMIT or BEGIN-ROLLBACK, then, are used to bracket the ACID transformations.

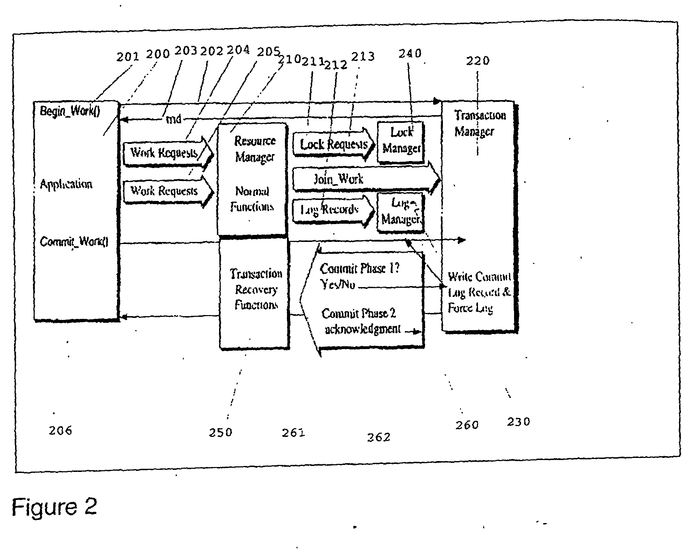

The basis control flow of a transactional application and the major components within a transaction processing system are visualized in Figure 2. Figure 2 depicts
- the transaction program 200,
- one of a potential multitude of resource managers 210, a resource managers being a subsystem that manages some transactional objects of a certain type. The resource manager typically offers services to applications or other resource managers, which might be available in the overall system.
- the transaction manager 220, which orchestrates the commit and rollback of transactions as well as the recovery of objects, resources, resource managers or local ore remote sites after they fail,
- the log manager 230, which records a log of changes made by the transaction, so that a consistent version of all objects and resources can be reconstructed in case of failure,
- a lock manager 240, which provides a generic mechanism to regulate concurrent access to objects and resource, helping the resource managers to provide transaction isolation,
- the transaction recovery functions 250, activated in case of failures within the commit scope of the transaction program.

According to Figure 2 the BEGIN_WORK() verb 201 starts the transaction, registering it 202 with the transaction manager and creating a unique transaction identifier 203. Once the application has started a transaction, it can begin to invoke resource managers 204 to 205, reading and writing databases, sending requests to local and remote sites or manipulating any other type of resource.
When a resource manager 210 gets the first request associated with that transaction, it joins 211 the transaction, telling the local transaction manager 220 that it want's to participate in the transactions's commitment and rollback operations. It is typical for several resource managers to join the transaction. As these resource managers perform work on behalf of the transactions, they keep lists of changes they have made to objects. As a rule, they record both the old and the new value of an object or resource. The transaction processing system provides a logging service 212 to record these changes. The log manager 230 efficiently implements a sequential file of all the updates of transaction to objects and resources. Of course, the resource managers have to tell the log manager what these updates are.
To provide isolation, resource managers lock 213 the objects and resources accessed by the transaction; this prevents other transactions from seeing the uncommitted updates of this transaction and prevents them from altering the data read or written by this uncommitted transaction. The transaction processing system provides a lock manager 240 that other resource managers can use.
When the transaction 200 issues COMMIT_WORK() 206, the transaction manager performs an atomic commit protocol, i.e. in the current case a two-phase-commit-protocol 260. First, it queries all resource managers that joined the transaction, asking 261 if they think the transaction is a consistent and complete transformation. Any resource manager can vote no 262, in which case the commit fails. But if all the resource managers vote yes 262, then the transaction is a correct transformation, and the transaction manager records this fact in the log, informing each resource manager that the transaction is complete. At this point, the resource managers can release the locks and perform any other operations needed to complete the transaction. If the transaction should fail during execution, or if a resource manager votes no during phase 1 of the 2PC, then the transaction manager orchestrates transaction roll-back. In this case, the transaction manager reads the transaction's log and, for each log record, invokes the resource manager that wrote the log record, asking the resource manger to undo the operation. Once the undo scan is complete, the transaction manager invokes each resource manager that joined the transaction and tells it that the transaction was aborted.
The transaction manager also orchestrates transaction recovery if a node or site fails. It provides generic services for the failure of a single object, the failure of a resource manager, and the failure of an entire site.
In the following offers a sketch of how the transaction manager helps in system recover.
After a site fails, the transaction processing (TP) system restarts all resource managers. Several transactions may have been in progress at the time of the failure. The resource managers contact the transaction manager as part of their restart logic. At that time, the transaction manager informs them about the outcome of each transaction that was active at the time of the failure. Some may have committed, some may have aborted, and some still may be in the progress of committing. The resource manager can recover its committed state independently, or it can participate in the transaction manager's undo and redo scan of the log.
If a resource manager fails but the rest of the TP system continues operating, the transaction manager aborts all transactions involved with that resource manager. When the resource manager returns to service, the transaction manager informs the resource manager about the outcome of those transactions. The resource manager can use this information and the transaction log to reconstruct its state.
If a particular object is lost but the resource manager is otherwise operational, then the resource manager can continue to offer service on other objects while the failed object is reconstructed from an archive copy and from a log of all committed changes to that copy. The transaction manager and the log manager aid recovery from an archive copy of the object.
Each site usually has a separate transaction manager. This allows each site to operate independently of the others, providing local autonomy. When the transaction's execution is distributed among several sites, it is distributed among several transactions managers. In that case the 2PC protocol is used within multiple transaction managers.

Resources, also called transactional objects, maintained and controlled by a resource manager are **protected resources** or **recoverable resources**. Actions targeted against protected resources do not externalize their results before they are completely done. Their updates are commitment controlled, they can roll-back if anything goes wrong before a normal end, and once they have reached their normal end, there will be no unilateral roll-back. Thus actions targeted at protected resources have the ACID property.

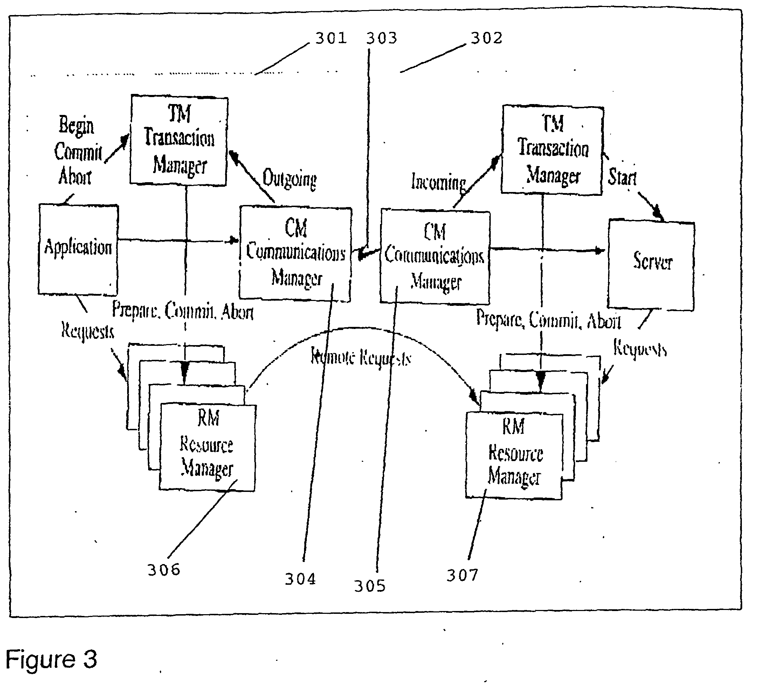

Figure 3 visualizes a TP system more focussing on the aspects of distributed TP systems. Furthermore some variants compared to the model outlined in Figure 2 are portrayed. The model of Figure 3 is along the lines of the X/OPEN consortium point of view.
Figure reflects two TP systems 301 and 302 connected via some computer network 303. Both TP systems encompass a specific resource manager responsible for the communication in between them, the communication managers 304 and 305. Moreover in this model it is assumed that each resource manager 306 and 307 has a private log and a private lock manager. It is presumed that the resource managers performs its own roll-back, based on a single roll-back call from the transaction manager, in case the transaction aborts.

The expressive power of a "classic" transaction just consisting of a single atomic activity is quite limited. Many situations exist in which more flexible means of control would be required than classical transaction provide. Especially for real-world applications collections of transactions do have to cooperate to achieve a desired processing goal. Such a collection of classical ACID transactions is called a **global transaction** if its atomicity is ensured. From computer science mechanisms are known to ensure atomicity of global transactions. One approach to deal with the problem of global transactions are so-called **chained transactions**. Chained transactions offer a particular approach to reduce to a certain extend the processing effort associated with synchronous Atomic Commit Protocols (ACP) for assuring ACIDicity. Other approaches are for example **savepoint techniques, nested transactions, sagas** and so on.

### 4.1.2 Workflow Management Systems

The following is a short outline on the basic concepts of a workflow management system based on IBM's FlowMark WFMS:

From an enterprise point of view the management of business processes is becoming increasingly important: **business processes** control which piece of work will be performed by whom and which resources are exploited for this work, i.e. a business process describes how an enterprise will achieve its business goals. A WFMS may support both, the modeling of business processes and their execution.

Modeling of a business process as a syntactical unit in a way that is directly supported by a software system is extremely desirable. Moreover, the software system can also work as an interpreter basically getting as input such a model: The model, called a **process model**, can then be instantiated and the individual sequence of work steps depending on the context of the instantiation of the model can be determined. Such a model of a business process can be perceived as a template for a class of similar processes performed within an enterprise; it is a schema describing all possible execution variants of a particular kind of business process. An instance of such a model and its interpretation represents an individual process, i.e. a concrete, context dependent execution of a variant prescribed by the model. A WFMSs facilitates the management of business processes. It provides a means to describe models of business processes (build time) and it drives business processes based on an associated model (run time). The meta model of IBM's WFMS FlowMark, i.e. the syntactical elements provided for describing business process models, and the meaning and interpretation of these syntactical elements, is described next.

**Activities** are the fundamental elements of the meta model. An activity represents a business action that is from a certain perspective a semantical entity of its own. With the model of the business process it might have a fine-structure that is then represented in turn via a model, or the details of it are not of interest at all from a business process modeling point of view. Refinement of activities via process models allows for both, modeling business processes bottom-up and top-down.

The results that are in general produced by the work represented by an activity is put into an output container, which is associated with each activity. Since an activity will in general require to access output containers of other activities, each activity is associated in addition with an **input container** too. At run time, the actual values for the formal parameters building the input container of an activity represent the actual context of an instance of the activity.

Since activities might not be executed arbitrarily they are bound together via **control connectors**. A control connector might be perceived as a directed edge between two activities; the activity at the connector's end point cannot start before the activity at the start point of the connector has finished (successfully). Control connectors model thus the potential flow of control within a business process model.

In addition, a Boolean expression called **transition condition** is associated with each control connector. Parameters from output containers of activities having already produced their results are followed as parameters referenced in transition conditions. When at run time an activity terminates successfully all control connectors leaving this activity are determined and the truth value of the associated transition conditions is computed based on the actual values of their parameters. Only the end points of control connectors the transition conditions of which evaluated to TRUE are considered as activities that might be executed based on the actual context of the business process. Transition conditions model thus the context dependent actual flow of control within a business process (i.e. an instance of a model).

FlowMark consists, at the coarsest level, of a build time component and a run time component. The build time component supports the modeling of business processes according to the meta model described above and the run time component supports the corresponding semantics. Both components are implemented in a client/server structure. The client delivers the interaction with the user via an object-oriented graphical interface, invokes local tools, and provides animation. The server maintains the database for process instances, navigates through the process graph, and assigns the activities to the proper resources.

Process definition includes modeling of activities, control connectors between the activities, input/output container, and data connectors. A process is represented as a directed acyclic graph with the activities as nodes and the control/data connectors as the edges of the graph. The graph is manipulated via a built-in, event-driven, CUA compliant graphic editor. The data containers are specified as named data structures. These data structures themselves are specified via the DataStructureDefnition facility. FlowMark distinguishes three main types of activities: program activities, process activities, and blocks. Program activities are implemented through programs. The programs are registered via the Program Definition facility. Blocks contain the same constructs as processes, such as activities, control connectors etc. They are however not named and have their own exit condition. If the exit condition is not met, the block is started again. The block thus implements a Do Until construct. Process activities are implemented as processes. These subprocesses are defined separately as regular, named processes with all its usual properties. Process activities offer great flexibility for process definition. It not only allows to construct a process through permanent refinement of activities into program and process activities (top-down), but also to build a process out of a set of existing processes (bottom-up). In particular, process activities help to organize the modeling work if several process modeler are working together. It allows the team members to work independently on different activities. Program and process activities can be associated with a time limit. The time limit specifies how long the activity may take. If the time is exceeded, a designated person is notified. If this person does not react within another time limit, the process administrator is notified. It not only helps to recognize critical situation but also to detect process deficiencies as all notifications are recorded in an audit trail.

All data structures used as templates for the containers of activities and processes are defined via the Data Structure Definition Facility. Data Structures are names and are defined in terms of elementary data types, such as float, integer, or string and references to existing data structures. Managing data structures as separate entities has the advantage'that all interfaces of activities and their implementations are managed consistently in one place (similar to header files in programming languages).

All programs which implement program activities are defined via the Program Registration Facility. Registered for each program is the name of the program, its location, and the invocation string. The invocation string consists of the program name and the command string passed to the program.

Before process instances can be created, the process model must be translated to ensure the correctness and completeness of. the process model. The translated version of the model is used as a template when a process instance is created. This allows to make changes to the process model without affecting executing process instances. A process instance is started either via the graphical interface of via the callable process application programming interface. When a process is started, the start activities are located, the proper people are determined, and the activities are posted onto the work list of the selected people. If a user selects the activity, the activity is executed and removed from the work list of any other user to whom the activity has been posted. After an activity has executed, its exit condition is evaluated. If not met, the activity is rescheduled for execution, otherwise all outgoing control connectors and the associated transition conditions are evaluated. A control connector is selected, if the condition evaluates to TRUE. The target activities of the selected control connectors are then evaluated. If their start conditions are true, they are posted to the work list of selected people. A process is considered terminated, if all end activities have completed. To make sure that all end activities finish, a death path analysis is performed. It removes all edges in the process graph which can never be reached due to failing transition conditions. All information about the current state of a process is stored in the database maintained by the server. This allows for forward recovery in the case of crashes.

### 4.2 Overview on the Solution

The current invention describes a methodology of how a WFMS can ensure that particular collections of transactional workitems are performed in an atomic manner. The WFMS thus achieves an integration of transactions by a WFMS.

Up to the current point in time transaction processing systems and workflow management systems are separate technological areas. For example the state of the art is lacking an approach of a multitude of WFMS activities representing individual potentially distributed transactions which assemble some type of global transactions with respect to an underlying TP system, for which atomicity is assured. Moreover no approaches for defining and observing a commit scope with transaction boundaries encompassing several activities within the WFMS are available, not to talk about the possibility to model commit scopes and transactions boundaries within a WFMS i.e. outside TP systems.

Further difficulties are encountered when existing software components should be used for implementing activities in a WFMS and if at the same time transaction boundaries are to be established not already explicitly programmed into the components or if at the same time transaction boundaries are to be established deviating from those explicitly programmed into the components.

Various activities are currently standardizing interfaces and protocols supporting the goal to create an industry for prefabricated components which can be bought off-the-shelf to compose implementations of applications based on models for business processes. Such components will then be reusable across different WFMSs and across business processes. The paradigm of component based software construction promises the large scale exploitation of the benefits of reusing prefabricated parts to build applications even by non-data-processing professionals. These parts are plugged together via "using languages" like scripts or workflows. By focussing in what follows on workflows as the means to plug parts together, the usual nomenclature of "activity implementation" (or "activity" for short) instead of "part" can be adopted. In order to maximize the reusability of these components no assumptions should be made about its usage with respect to transaction boundaries as an individual activity cannot foresee the commit scope within which it will be used later.

Therefore the current invention is based on the approach that the WFMS itself is responsible to establish and control the commit scope and the transaction boundaries of groups of activities within the process model, said activities are called **transactional workitems** if transactional behavior is to be guaranteed for their execution. The fundamental approach of the current invention will be to support to specify transactional properties of groupings of such components external to them as a property of the model of the business process. The invention is especially independent from any enhancements of above mentioned standards already published because they are considered to be not practical based on above mentioned obstructions.

The current state of the art creates the problem that manufacturers of components are not able to implement their components in such a way that they can comply with externally established transaction boundaries, i.e. allow their users to overwrite the end-of-transaction decisions made by the manufacturer's implementation. This significantly limits the scope of applicability of these components. These components cannot easily compose applications which have certain transactional properties which otherwise must be programmed into the components of the application.

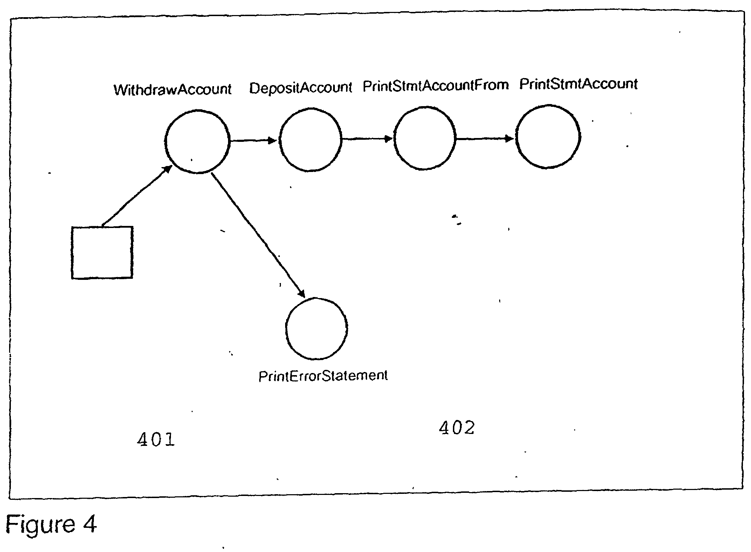

Now, in order to be reusable in a large spectrum of applications each activity implementation must have in addition (to above mentioned requirements) the liberty to establish its own transaction boundaries. The problem occurs when an application requires the grouping of such activity implementations into a common transaction boundary, for example to avoid the loss of updates: Assuming according to Figure 4, which reflects the problem of commit scopes of a single transactional workitem versus a group of transactional workitems, that a funds transfer workflow encompasses an activity WITHDRAW 401 and an activity DEPOSIT 402. The WITHDRAW activity withdraws the amount to be transferred from the account being the source of the transfer and the DEPOSIT activity deposits this amount to the account being the target of the transfer. Both activities commit their changes to their (local) database according local commit scopes relating only to the individual transactional workitem. It might happen that the commit of the DEPOSIT activity is not accepted while the commit of the WITHDRAW activity is accepted. In this case, the amount has been withdrawn from the source account but it has not been deposited on the target account. As a result, as no global commit scope encompassing both activities WITHDRAW and DEPOSIT could be established, the amount to be transferred is lost!

To cope with these difficulties the current invention allows to specify transactional properties of groupings of such components external to them as a property of the model of the business process.

This invention enables manufacturers of WFMSs
1. to let their customers specify groupings of activities which will have the property that either all activities of the grouping have performed transactionally successful (i.e. its changes on recoverable objects have been committed or were identified to be omitted from transaction completion base on the actual workflow) or all have been aborted,
2. to manage such groupings at run time in such a way that the above operational behavior is enforced.

This invention enables manufactures of components (see above) to implement their components in such a way that they can comply with externally established transaction boundaries, i.e. allow their users to overwrite the end-of-transaction decisions made by the manufacturer's implementation. This will broaden the scope of applicability of these components.

This invention enables users WFMSs to easily use components to compose applications which have certain transactional properties which otherwise must be programmed into the components of the application.

The major concepts of the current invention are:
1. Only **transactional workitems** can be grouped together so that a WFMS can manage the atomic outcome of the operations of a collection of such workitems. A transactional workitem is a workitem whose associated activity implementation is based on a recoverable resource 'manager and whose behavior is influenced by participating in a transaction. Of course other non-transactional activities may participate in the underlying process model but they will not benefit from the atomicity support.
2. Only **atomic spheres** (a concept introduced by the invention and further outlined below) can be controlled to reach an atomic outcome. Consider the (not necessarily connected) subgraph of the graph representing the model of the overall workflow, being a specific instantiation and the executable version of a process model) defined by a collection of transactional workitems. This subgraph is an atomic sphere if and only if none of its connected components is reachable from a (not necessarily different) connected component of the same graph via a path within the encompassing graph containing at least one node not belonging to the sub-graph.
3. When the control flow enters an atomic sphere the first time, the WFMS creates a transaction context for the atomic sphere. This transaction context is shared by all transactional workitems contained within the atomic sphere. The WFMS ensures that the workflow will not leave the atomic sphere until the control flow within each connected component of the atomic sphere reaches the boundary of the atomic sphere. At this point in time the WFMS ends the transaction represented by the common transaction context by issuing a global commit for all transactional workitems (activities) within the atomic sphere to the underlying transaction processing system.

### 4.3 The Behavior of the Activity Implementation

The activity implementation of a transactional workitem must not initiate an end-of-transaction (EOT) processing when invoked within an atomic sphere. This is because it must be avoided that a single transactional workitem commits the commit scope of a collection of transactional workitems combined into an atomic sphere.

Several principle solutions are possible for this requirement. The activity implementation can achieve this either never initiating EOT-processing, or invoking this functionality only if it has verified that there is no current common transaction context (encompassing the commit scope of this specific transactional workitem) established.

An activity implementation avoiding invoking EOT-processing depends on an encompassing instance like a WFMS providing atomic spheres according to this invention to commit or rollback its processing results. For this purpose that the subject activity implementation will not participate in a collection of transactional workitems and atomicity is to be assures for that specific activity alone, the activity implementation will be an atomic sphere of its own.

An activity implementation, being able to establish its own transaction boundaries in order to be usable outside WFMS implementing atomic spheres, can check the existence of a current transaction context according to one of the following possibilities:
o In an OMG Object Transaction Services (OTS) environment invocation of the get_control() operation could be extended to return a potential existing transaction context. If a NULL object reference is returned there is no transaction context established and the activity implementation has to establish its own transaction boundaries; otherwise the activity implementation is not allowed to initiate EOT-processing because this will be done by the WFMS due to an existing transactional context.
o In an X/Open Distributed Transaction Processing (DTP) environment invocation of the tx_info() function of the transaction manager interface could be extended.to return a potential existing transaction context. If the transaction identification (XID) element of the returned TXINFO structure is null, the activity implementation has to establish its own transaction boundaries because there is no transaction context established; otherwise the activity implementation is not allowed to initiate EOT-processing because this will be done by the WFMS due to an existing transactional context.
o Another possibility is that the activity, when started by the WFMS, is getting passed a transaction context or a reference to a transaction context is such a transaction context has been established already. Thus depending on whether a transaction context has been passed the implementation of the activity can decide whether to establish an own transaction context or not.

### 4.4 The Notion of an Atomic Sphere

A **workflow** is an instance of a process model. We assume that process models are described as a network of activities constructed as a directed, acyclic, weighted, colored graph (in accordance with the view of responsible standardization body WfMC), so a workflow may be perceived as a particular collection of paths taken in such a graph. Of course the execution of the various potential paths may or may not depend on further conditions, for example on transition conditions.

The activities to be performed within a process are the nodes of the associated graph. A workitem within a workflow is always associated within a particular activity of the corresponding graph. Consequently, the grouping of workitems w.r.t. transactional behavior is performed by specifying a collection of activities of a process model. In that sense a set of activities of a process model is called an **atomic sphere** if and only if the subgraph defined by this set does not contain two (not necessarily different) nodes which are connected via a path in the encompassing graph which contains at least one node not contained in the atomic sphere.

It is important to recognize that the WFMS itself is able based on a process model to automatically determine atomic spheres. Moreover it is possible for instance that, based on certain criteria a user might define (for instance a specific node belonging or not belonging to a certain atomic sphere) that the WFMS itself is able based on a process model to automatically determine atomic spheres.

The transactional semantics of an atomic sphere is as follows: When the control enters the atomic sphere the first time the WFMS establishes the common transaction context for all workitems corresponding to activities within the sphere. The WFMS will postpone navigation along all edges leaving the atomic sphere until all these edges are ready for further processing. At this point in time the WFMS issues a global commit, i.e. the transactional workitems encompassed in the atomics sphere are initiated to progress with their EOT-processing.

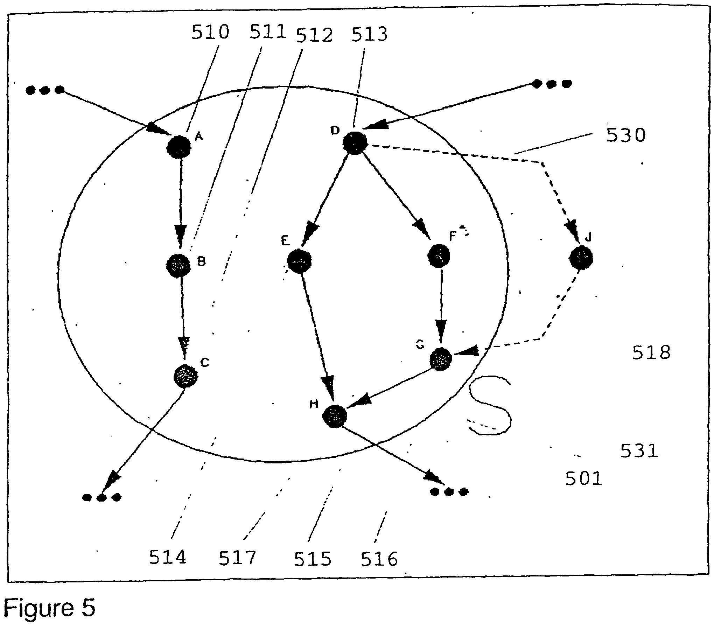

The fundamental restriction on a collection of activities to define an atomic sphere is that paths which are leaving a sphere must not enter it again. This is to avoid deadlock situations. Figure 5 depicts an example of the notion of an atomic sphere. For example, Figure 5 depicts an atomic sphere S 501 consisting of the activities A 510 to H 517, satisfying above defined criteria. In case the activity J 518 is added to the process model with the two dashed control connectors 530 and 531 the collection S={A,...,H} will no longer be an atomic sphere because D 513 and G 516 are connected via a path {530, 531} that encompasses a node (namely J 518) outside of S. Thus, the WFMS would wait with navigating from D 513 to J 518 until the control flow is ready to leave the sphere from both, C 512 and H 517. But since G 516 will never be started by the WFMS because it is waiting forever for the termination of J 518, H 517 will never be started showing the dead-lock condition.

### 4.5 Determining the Common Transaction Context

Let S be an atomic sphere in the process P. All workitems (which are transactional by definition of an atomic sphere) performed within an atomic sphere are executed within a common transaction context. Thus, when control flow is entering a sphere the WFMS must make sure that a common transaction context (simply called the root in the following) which is representing S is established: If the root has already been established because of the control flow entered the sphere before the transaction identifier of this root is returned; otherwise, the root is created and the associated transaction identifier is returned.

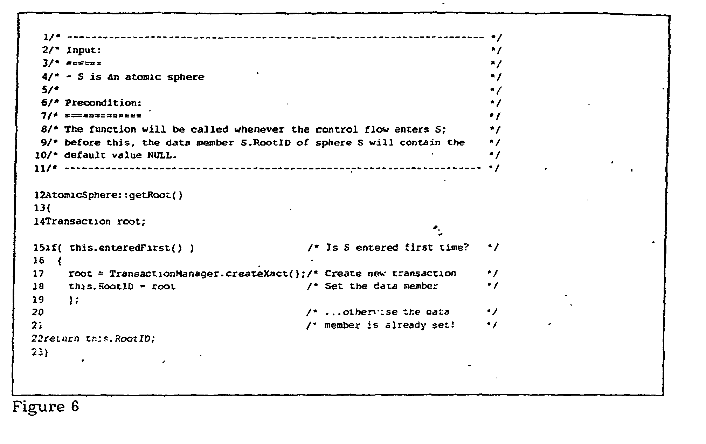

When the implementation of a (transactional) workitem A within an atomic sphere S is invoked it must get passed (for instance by certain parameters) the transaction identifier RootID of the root transaction representing S. This allows A to determine the already established transaction context. Another possibility is that the transactional workitem A is calling a specific service, getRoot() in our embodiment, determining and returning a potential existing transactional context. As shown in Figure 6, which reflects the major elements of a C++ program for the getRoot() service, this determination can be done without involving the WFMS for this purpose. The basic logic behind getRoot() as reflected in Figure 6 is to create a new transaction context in line 17 if no transaction context has been created so far and to just return the transaction context in line 22 if one does exist.

But in this case or in similar cases when relying on comparable services according the environment specific operations of X/Open DTP or OMG DTS, respectively, the activity implementation is dependent on a certain type of transaction processing environment. To avoid this, the current invention proposes that the WFMS supports the identifier of the common transaction context as a build-in data member "RootID" of each input container. But this is not crucial for the following and one could provide other mechanisms like an API for "invoked applications" allowing to enquire the root (for example the above "getRoot()" will suffice).

### 4.6 The Notion of Obstructions

Let S be an atomic sphere in the process P. If S contains an activity with no outgoing control connector (called a sink) we add a virtual node (e.g. an activity having a NOP implementation performing no actual activity other than just returning) to P but outside of S, and connect all sinks of S with this particular "virtual node" via a control connector, then called **virtual connector**, having a TRUE transition condition. The set of **formal obstructions** fobst(S) of S is defined as the set of all edges originating from an activity within S having a target activity outside of S. The formal obstruction set of an atomic sphere represent the transitions of all different paths of the potential flow of control from within the sphere to outside of the sphere.

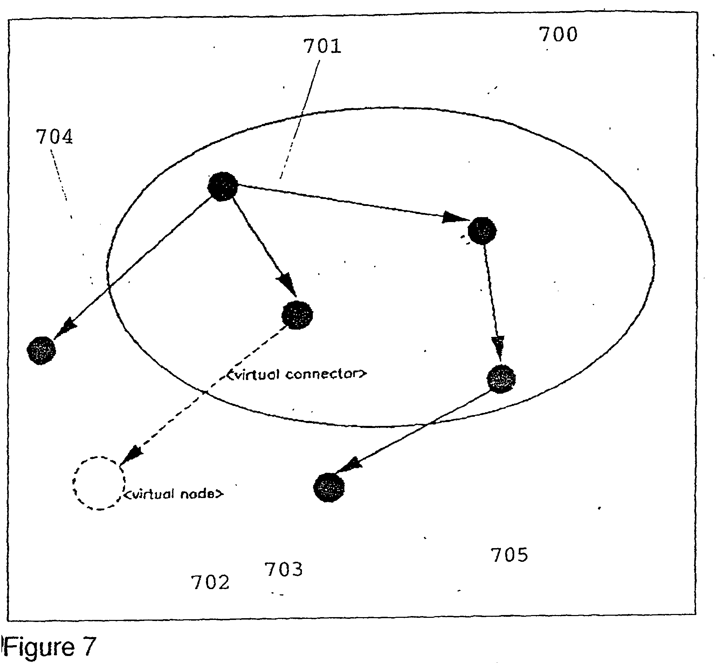

Above mentioned teaching are reflected in Figure 7. Figure 7 shows an atomic sphere S 700 with certain activities and certain control connectors. The activity 701 is sink according above terminology, as there is no outgoing control connector associated with that activity. By adding a virtual node 702 and a virtual connector 703 activity 701 looses the property of representing a sink. Finally after this modifications of the process model the atomic sphere S 700 has a set of formal obstructions consisting of the control connectors of obst(s) = {703, 704, 705}.

The set of **actual obstructions** (or obstructions for short) obst(S) of S is the set of all formal obstructions which have not been touched by the navigator based on the current state of the corresponding process instance. Except for the beginning, the set of formal obstructions of a sphere is in general a proper superset of its actual obstructions (i.e. fobst(S) ⊇ obst(S)). According the current teaching the usual navigation processing of the WFMS is adapted to maintain the set of all actual obstructions.

When the control flow enters such an obstruction it must wait along the corresponding path until all other obstructions are reached. At this latter point in time the (root) transaction corresponding to the atomic sphere will be committed by the WFMS.

### 4.7 Navigation in Atomic Spheres

Let A be an activity implementation that just terminated so that the WFMS performed a navigation step based on A; in FlowMark an "exit condition" must have been met or the activity must have been "forced finished" before a further navigation step of the navigator takes place, but as these details are not outlined in more details. For each control connector having a transition condition which evaluates to TRUE returned by the navigator as next possible path to follow it is checked whether the associated edge is an obstruction to commit or whether the usual processing can be performed (i.e. determination of its target activity, then staff resolution,...). When an obstruction is reached it is removed from the obstruction set and put into the set of control connectors along which navigation is held. If it was the last obstruction of the sphere S a commit for the associated transaction is issued. Then all waiting connectors are released, i.e. the usual processing along the corresponding paths continues.

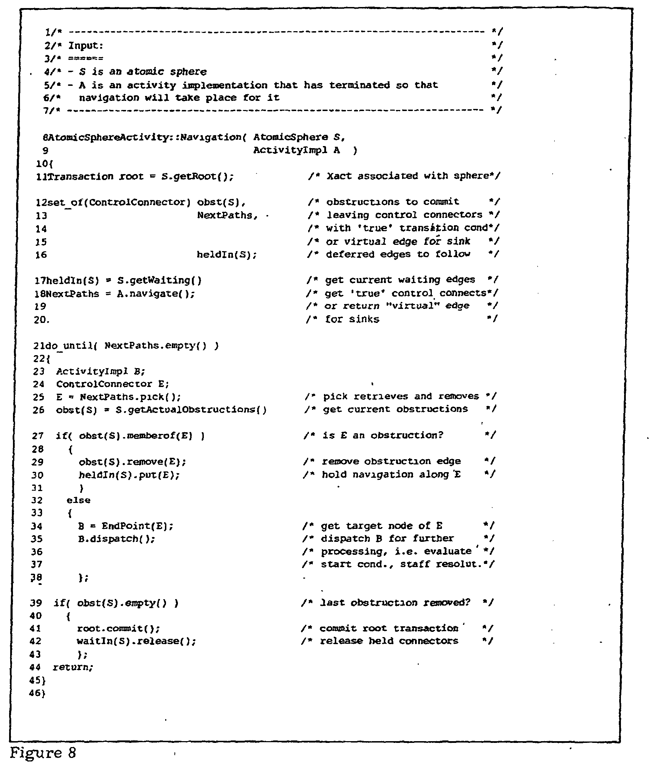

By administrating the set of actual obstruction the WFMS is able to control when the boundary of an atomic sphere is reached and when to commit all transactional workitems which participated in the atomic sphere. Figure 8 outlines further details of this process. For example within a loop an analysis of all outgoing paths from the activity just finished its processing is performed encompassing:
o a step in line 25 to determine the next path within the process model leaving the current activity,
o a step in line 27 to check if the current next path belongs to the set of actual obstructions,
o if the current next path belongs to the set of actual obstructions, a step in line 29,30 to remove that path from the set of formal obstructions and to hold navigation along that path,
o if the current next path belongs not to the set of actual obstructions, a step in line 35 processes the next activity,
o and finally if the set of actual instructions is empty, the corresponding atomic sphere will be committed in line 41 and all held navigations along connectors is released in line 42.

### 5 Acronyms

- **2PC**: Two-Phase-Commit Protocol
- **ACP**: Atomic Commit Protocol
- **DTS**: Distributed Transaction Services
- **ISO**: International Standard Organization
- **ODA**: Object Definition Alliance
- **OMG**: Object Management Group
- **OTS**: Object Transaction Services
- **TM**: Transaction Manager
- **TP**: Transaction Processing
- **WfMC**: Workflow Management Coalition
- **WFMS**: Workflow Management System
- **XID**: Transaction Identification

## Claims

1. A computerized method of defining at least one atomic-sphere for ensuring atomicity of a collection of transactional-workitems by at least one computer system, said computer system storing a process-model, said process-model comprising one or more activities being the nodes of an arbitrary graph, and directed edges of said graph being control-connectors defining a potential flow of control within said process-model and one or more of said activities being transactional-workitems to be processed atomically,
said method of defining being **characterized by**,
determining said atomic-sphere (501, 700) as a collection of said activities being a subgraph of said process-model to be executed as a global-transaction,
and further determining said subgraph that does not contain not necessarily different activities which are connected by a path of control-connectors which contains at least one activity not contained in said atomic-sphere.

2. A computerized method of defining at least one atomic-sphere according to claim 1 further **characterized by**
determining sink-activities (701) of said atomic-sphere (700) with no outgoing control-connector and,
if at least one sink-activity is determined, adding a no-op-activity (702) to said process-model being outside of said atomic-sphere and connecting said sink-activity to that no-op-activity with a virtual-control-connector (703), said no-op-activity implementing a dummy activity.

3. A computerized method of defining at least one atomic-sphere according to claim 2 wherein said control-connectors are associated with transition-conditions said method being **characterized by**
adding a TRUE-transition-condition always being true to said virtual-connectors.

4. A computerized method of defining at least one atomic-sphere according to anyone of above claims being **characterized by**
being executed by a control-instance controlling execution of said process-model.

5. A computerized method of defining at least one atomic-sphere according to claim 4
wherein said control-instance is a workflow-management-system or wherein said control-instance is a transaction-processing-system.

6. A method of atomically executing an atomic-sphere (501, 700), said atomic-sphere being defined according to anyone of claims 1 to 5, said method being executed by at least one computer system and **characterized by**
creating an atomic-sphere-transaction-context for said atomic-sphere, if the control-flow along said control-connectors enters said atomic-sphere the first time, and
ensuring that the control-flow will not leave said atomic-sphere until the complete control-flow reaches the boundary of said atomic-sphere by postponing navigation along control-connectors leaving said atomic-sphere until all leaving control-connectors are evaluated.

7. A method of atomically executing an atomic-sphere according to claim 6 **characterized by**
ending said atomic-sphere-transaction-context, when the complete control-flow reaches said boundary of said atomic-sphere by committing all transactional-workitems processed as part of said atomic-sphere.

8. A method of atomically executing an atomic-sphere according to anyone of claim 6 to 7 **characterized by**
using an existing atomic-sphere-transaction-context, if the control-flow enters an atomic-sphere for which an atomic-sphere-transaction-context has been established already because the control-flow entered said atomic-sphere before.

9. A method of atomically executing an atomic-sphere according to anyone of claim 6 to 8
wherein said transactional-workitems may either never committing said ending said atomic-sphere-transaction-context of said atomic-sphere, or
wherein said transactional-workitems may committing said ending of said atomic-sphere-transaction-context of said atomic-sphere only, if no atomic-sphere-transaction-context has been established yet.

10. A method of atomically executing an atomic-sphere according to anyone of claim 6 to 9 **characterized by**
determining a potential existence of an atomic-sphere-transaction-context by an activity by either calling a query-transaction-service (GetRoot), or by
passing said potential existing atomic-sphere-transaction-context to an activity when invoking said activity, or by
passing a transaction-identifier to an activity when invoking said activity said transaction-identifier allowing to determine said atomic-sphere-transaction-context.

11. A method of atomically executing an atomic-sphere according to claim 10 further encompassing at least one input-container associated with said activity and further **characterized by**
passing said atomic-sphere-transaction-context to an activity within said atomic-sphere as part of said input-container.

12. A method of atomically executing an atomic-sphere according to anyone of claim 6 to 11 **characterized by**
ensuring that the control-flow will not leave said atomic-sphere (S) until the complete control-flow reaches the boundary of said atomic-sphere by administrating a set of actual-obstructions (OBST(S)) comprising the set of all control-connectors originating from activities within said atomic-sphere directed to target-activities outside said atomic-sphere and which control-connectors have not been reached so far by the current process instance, and by further
delaying execution of said target-activities until all obstructions of said set of actual-obstructions have been reached.

13. A method of atomically executing an atomic-sphere according to anyone of claim 6 to 12 being **characterized by**
being executed by a control-instance controlling execution of said process-model.

14. A method of atomically executing an atomic-sphere according to claim 13
wherein said control-instance is a workflow-management-system or wherein said control-instance is a transaction-processing-system.

## Patentansprüche

1. Computergestütztes Verfahren zum Definieren mindestens einer unteilbaren Sphäre, um die Unteilbarkeit einer Ansammlung von transaktionellen Arbeitsschritten durch mindestens ein Computersystem sicherzustellen, wobei in dem Computersystem ein Prozessmodell gespeichert ist, das eine oder mehrere die Knoten eines beliebigen Graphen darstellende Aktivitäten umfasst, wobei die gerichteten Kanten des Graphen Steuerungskonnektoren sind, die einen potenziellen Steuerungsfluss innerhalb des Prozessmodells definieren, wobei eine oder mehrere dieser Aktivitäten ungeteilt zu verarbeitende transaktionelle Arbeitsschritte sind, und wobei das Definitionsverfahren **dadurch gekennzeichnet ist, dass**
die unteilbare Sphäre (501, 700) als eine Ansammlung der Aktivitäten bestimmt wird, die ein Untergraph des als globale Transaktion auszuführenden Prozessmodells sind,
und dass außerdem der Untergraph bestimmt wird, der nicht notwendigerweise unterschiedliche Aktivitäten enthält, die untereinander durch einen Pfad von Steuerungskonnektoren verbunden sind, der mindestens eine nicht in der unteilbaren Sphäre enthaltene Aktivität enthält.

2. Computergestütztes Verfahren zum Definieren mindestens einer unteilbaren Sphäre nach Anspruch 1, außerdem **dadurch gekennzeichnet, dass**
Empfangsaktivitäten (sink activities) (701) der unteilbaren Sphäre (700) ohne abgehenden Steuerungskonnektor bestimmt werden, und
dass im Fall der Bestimmung mindestens einer Empfangsaktivität dem außerhalb der unteilbaren Sphäre befindlichen Prozessmodell eine Nullbefehl-Aktivität (no-op activity) (702) hinzugefügt wird, und dass die Empfangsaktivität durch einen virtuellen Steuerungskonnektor (703) mit der Nullbefehl-Aktivität verbunden wird, wobei die Nullbefehl-Aktivität eine Pseudoaktivität implementiert.

3. Computergestütztes Verfahren zum Definieren mindestens einer unteilbaren Sphäre nach Anspruch 2, bei dem den Steuerungskonnektoren Übergangsbedingungen zugeordnet werden, und das **dadurch gekennzeichnet ist, dass**
den virtuellen Konnektoren eine WAHR-Übergangsbedingung zugeordnet wird, die immer wahr ist.

4. Computergestütztes Verfahren zum Definieren mindestens einer unteilbaren Sphäre nach einem beliebigen der oben genannten Ansprüche, **dadurch gekennzeichnet, dass**
es von einer Steuerungsinstanz ausgeführt wird, die die Ausführung des Prozessmodells steuert.

5. Computergestütztes Verfahren zum Definieren mindestens einer unteilbaren Sphäre nach Anspruch 4,
bei dem die Steuerungsinstanz ein Arbeitsflussverwaltungssystem ist, oder bei dem die Steuerungsinstanz ein Transaktionsverarbeitungssystem ist.

6. Verfahren zum ungeteilten Ausführen einer unteilbaren Sphäre (501, 700), die gemäß einem beliebigen der Ansprüche 1 bis 5 definiert wird, wobei das Verfahren von mindestens einem Computersystem ausgeführt wird und **dadurch gekennzeichnet ist, dass**
für die unteilbare Sphäre ein Kontext aus unteilbarer Sphäre und Transaktion erstellt wird, wenn der Steuerungsfluss entlang den Steuerungskonnektoren zum ersten Mal in die unteilbare Sphäre eindringt, und dass
sichergestellt wird, dass der Steuerungsfluss die unteilbare Sphäre so lange nicht verlässt, bis der vollständige Steuerungsfluss die Grenze der unteilbaren Sphäre erreicht, indem die Navigation entlang den aus der unteilbaren Sphäre abgehenden Steuerungskonnektoren so lange aufgeschoben wird, bis alle abgehenden Steuerungskonnektoren bewertet sind.

7. Verfahren zum ungeteilten Ausführen einer unteilbaren Sphäre nach Anspruch 6, **dadurch gekennzeichnet, dass**
der Kontext aus unteilbarer Sphäre und Transaktion beendet wird, wenn der vollständige Steuerungsfluss die Grenze der unteilbaren Sphäre erreicht, indem alle transaktionellen Arbeitsschritte als Teil der unteilbaren Sphäre festgeschrieben werden.

8. Verfahren zum ungeteilten Ausführen einer unteilbaren Sphäre nach einem beliebigen der Ansprüche 6 bis 7, **dadurch gekennzeichnet, dass**
ein vorhandener Kontext aus unteilbarer Sphäre und Transaktion verwendet wird, wenn der Steuerungsfluss in eine unteilbare Sphäre eindringt, für die bereits ein Kontext aus unteilbarer Sphäre und Transaktion erstellt wurde, weil der Steuerungsfluss zuvor in die unteilbare Sphäre eingedrungen war.

9. Verfahren zum ungeteilten Ausführen einer unteilbaren Sphäre nach einem beliebigen der Ansprüche 6 bis 8,
bei dem die transaktionellen Arbeitsschritte entweder niemals das Ende des Kontexts aus unteilbarer Sphäre und Transaktion festschreiben, oder
bei dem die transaktionellen Arbeitsschritte das Ende des Kontexts aus unteilbarer Sphäre und Transaktion nur festschreiben, wenn noch kein Kontext aus unteilbarer Sphäre und Transaktion erstellt wurde.

10. Verfahren zum ungeteilten Ausführen einer unteilbaren Sphäre nach einem beliebigen der Ansprüche 6 bis 9, **dadurch gekennzeichnet, dass**
durch eine Aktivität ein potenzielles Vorhandensein eines Kontexts aus unteilbarer Sphäre und Transaktion bestimmt wird, indem entweder ein Transaktionsabfrageservice (GetRoot) aufgerufen wird, oder indem
der potenziell vorhandene Kontext aus unteilbarer Sphäre und Transaktion beim Aufrufen einer Aktivität dieser Aktivität übergeben wird, oder indem
eine Transaktions-ID beim Aufrufen einer Aktivität dieser übergeben wird, wobei die Transaktions-ID das Bestimmen des Kontexts aus unteilbarer Sphäre und Transaktion ermöglicht.

11. Verfahren zum ungeteilten Ausführen einer unteilbaren Sphäre nach Anspruch 10, das außerdem mindestens einen der Aktivität zugeordneten Eingabecontainer umfasst, und das **dadurch gekennzeichnet ist, dass**
der Kontext aus unteilbarer Sphäre und Transaktion als Teil des Eingabecontainers einer Aktivität innerhalb der unteilbaren Sphäre übergeben wird.

12. Verfahren zum ungeteilten Ausführen einer unteilbaren Sphäre nach einem beliebigen der Ansprüche 6 bis 11, **dadurch gekennzeichnet, dass**
sicherstellt wird, dass der Steuerungsfluss eine unteilbare Sphäre (S) so lange nicht verlässt, bis der gesamte Steuerungsfluss die Grenze der unteilbaren Sphäre erreicht hat, indem ein Satz von Ist-Blockierungen (actual obstructions) (OBST(S)) verwaltet wird, der den Satz aller aus Aktivitäten innerhalb der unteilbaren Sphäre stammenden Steuerungskonnektoren umfasst, die auf Zielaktivitäten außerhalb der unteilbaren Sphäre gerichtet sind und bisher noch nicht von Steuerungskonnektoren der aktuellen Prozessinstanz erreicht wurden, und indem außerdem
die Ausführung der Zielaktivitäten so lange aufgeschoben wird, bis alle Blockierungen des Satzes der Ist-Blockierungen erreicht wurden.

13. Verfahren zum ungeteilten Ausführen einer unteilbaren Sphäre nach einem beliebigen der Ansprüche 6 bis 12, **dadurch gekennzeichnet, dass**
es von einer Steuerungsinstanz ausgeführt wird, die die Ausführung des Prozessmodells steuert.

14. Verfahren zum ungeteilten Ausführen einer unteilbaren Sphäre nach Anspruch 13,
bei dem die Steuerungsinstanz ein Arbeitsflussverwaltungssystem ist, oder bei dem die Steuerungsinstanz ein Transaktionsverarbeitungssystem ist.

## Revendications

1. Un procédé informatisé de définition d'au moins une sphère atomique, pour assurer l'atomicité d'une collection d'éléments de travail transactionnels par au moins un système d'ordinateur, ledit système d'ordinateur stockant un modèle de processus, ledit modèle de processus comprenant une ou plusieurs activités formant les noeuds d'un graphique arbitraire, et des bords orientés dudit graphique étant des connecteurs de commande définissant un flux de commande potentiel à l'intérieur dudit modèle de processus, et une ou plusieurs desdites activités étant des éléments de travail transactionnels, devant être traités de façon atomique,
ledit procédé de définition étant **caractérisé par**,
la détermination de ladite sphère atomique (501, 700) en tant que collection desdites activités, comme un sous-graphe dudit modèle de processus à exécuter en tant que transaction globale,
et la détermination en outre dudit sous-graphe de manière à ce qu'il ne contienne pas d'activités différentes inutiles connectées par un chemin de connecteurs de commande contenant au moins une activité non contenue dans ladite sphère atomique.

2. Un procédé informatisé de définition d'au moins une sphère atomique selon la revendication 1, **caractérisé en outre par**
la détermination d'activités-puits (701) de ladite sphère atomique (700) avec un connecteur de commande non sortant, et
si au moins une activité-puits est déterminée, addition d'une activité no-op (702) audit modèle de processus extérieur à ladite sphère atomique et connexion de ladite activité-puits à cette activité no-op avec le connecteur de commande virtuelle (703), ladite activité no-op mettant en outre une activité fictive.

3. Un procédé informatisé de définition d'au moins une sphère atomique selon la revendication 2, dans lequel lesdits connecteurs de commande sont associés à des conditions de transaction, ledit procédé étant **caractérisé par**
l'addition d'une condition de transition VRAIE, qui est toujours vraie, auxdits connecteurs virtuels.

4. Un procédé informatisé de définition d'au moins une sphère atomique selon l'une quelconques des revendications ci-dessus, **caractérisé par**
le fait d'être exécuté par une instance de commande, commandant l'exécution dudit modèle de processus.

5. Un procédé informatisé de définition d'au moins une sphère atomique selon la revendication 4,
dans lequel ladite instance de commande est un système de gestion de déroulement de travail, ou
dans lequel ladite instance de commande est un système de traitement de transaction.

6. Un procédé d'exécution atomatique d'une sphère atomique (501, 700), ladite sphère atomique étant définie selon l'une quelconque des revendications 1 à 5, ledit procédé étant exécuté par au moins un système d'ordinateur et **caractérisé par** :
la création d'un contexte-de-transaction-à-sphère-atomique pour ladite sphère atomique, si ledit flux de commande dans lesdits connecteurs de commande entre dans ladite sphère atomique pour la première fois, et
l'assurance que le flux de commande ne quitte pas ladite sphère atomique jusqu'au moment auquel le flux de commande complet atteint la frontière de ladite sphère atomique, par retardement de la navigation sur des connecteurs de commande quittant ladite sphère atomique jusqu'à ce que la totalité des connecteurs de commande ait été évaluée.

7. Un procédé d'exécution atomatique d'une sphère atomique selon la revendication 6, **caractérisé par** :
l'achèvement dudit contexte de transaction de sphère atomique lorsque ledit flux de commande complet atteint ladite frontière de ladite sphère atomique, par utilisation de tous les éléments de travail transactionnels traités en tant que partie de ladite sphère atomique.

8. Un procédé d'exécution atomatique d'une sphère atomique selon l'une quelconque des revendications 6 ou 7, **caractérisé par**
l'utilisation d'un contexte à transaction à sphère atomique existant, si le flux de commande pénètre dans une sphère atomique pour laquelle un contexte de transaction de sphère atomique a déjà été déjà établi du fait que le flux de commande est entré précédemment dans ladite sphère atomique.

9. Un procédé d'exécution atomatique d'une sphère atomique selon l'une quelconque des revendications 6 à 8,
dans lequel soit lesdits éléments de travail transactionnels peuvent ne jamais engager ledit achèvement dudit contexte de transaction de sphère atomique de ladite sphère atomique, soit
dans lequel lesdits éléments de travail transactionnels peuvent engager ledit achèvement dudit contexte à transaction à sphère atomique de ladite sphère atomique, uniquement si aucun contexte-de-transaction-à-sphère-atomique n'a encore été établi.

10. Un procédé d'exécution atomatique d'une sphère atomique selon l'une quelconque des revendications 6 à 9, **caractérisé par**
la détermination d'une existence potentielle d'un contexte-de-transaction-à-sphère-atomique par une activité, soit en appelant un service de transaction de consultation (GetRout), soit
en faisant passer ledit contexte-de-transaction-à-sphère-atomique existant potentielle à une activité lors de l'appel de ladite activité, soit
en faisant passer un identificateur de transaction à une activité, lors de l'appel de ladite activité par ledit identificateur de transaction, permettant de déterminer ledit contexte-de-transaction-à-sphère-atomique.

11. Un procédé d'exécution atomatique d'une sphère atomique selon la revendication 10, englobant en outre au moins un conteneur d'entrée associé à ladite activité et **caractérisé en outre par** :
le passage dudit contexte-de-transaction-à-sphère-atomique à une activité dans ladite sphère atomique, en tant que partie dudit conteneur d'entrée,

12. Un procédé d'exécution atomatique d'une sphère atomique selon l'une quelconque des revendications 6 à 11, **caractérisé par**
le fait d'assurer que le flux de commande ne va pas quitter ladite sphère atomique (S) jusqu'à ce que le flux de commande complet ait atteint la frontière de ladite sphère atomique, par administration d'un jeu d'obstructions actuelles (OBST(S)), comprenant le jeu de la totalité des connecteurs de commande provenant des activités dans ladite sphère atomique, dirigé vers des activités cibles extérieures à ladite sphère atomique, et les connecteurs de commande n'ayant pas encore été atteints par l'instance de processus actuelle et, en outre,
par le fait de retarder l'exécution desdites activités cibles jusqu'à ce que la totalité des obstructions dudit jeu d'obstructions actuelles aient été atteintes.

13. Un procédé d'exécution atomatique d'une sphère atomique selon l'une quelconque des revendications 6 à 12, **caractérisé par** :
le fait d'être exécuté par une instance de commande contrôlant l'exécution dudit modèle de processus.

14. Un procédé d'exécution atomatique d'une sphère atomique selon la revendication 13,
dans lequel ladite instance de commande est un système-de-gestion-de-déroulement-de travail, ou
dans lequel ladite instance de commande est un système de traitement de transaction.
